# EUROPEAN PATENT SPECIFICATION

(11) **EP 3 585 023 B1**
(45) Date of publication and mention of the grant of the patent: **25.10.2023**
(21) Application number: 17896450.8
(22) Date of filing: 21.12.2017
(51) Int. Cl.: H04L 9/40, G06F 21/10

(54) **DATA PROTECTION METHOD AND SYSTEM**
DATENSCHUTZVERFAHREN UND -SYSTEM
PROCÉDÉ ET SYSTÈME DE PROTECTION DE DONNÉES

(30) Priority: 15.02.2017 CN 201710081150
(43) Date of publication of application: 25.12.2019
(73) Proprietor: Beijing Senseshield Technology Co., Ltd., Beijing 100193 (CN)
(72) Inventor: SUN, Jiping, Beijing 100193 (CN); NIAN, Longlong, Beijing 100193 (CN)
(74) Representative: Petraz, Gilberto Luigi
(86) International application number: PCT/CN2017/117648
(87) International publication number: WO 2018/149225

(56) References cited:
- EP-A2- 2 400 417
- CN-A- 101 102 462
- CN-A- 102 625 188
- CN-A- 104 620 226
- CN-A- 105 429 752
- CN-A- 107 070 879
- US-A1- 2005 273 629
- US-A1- 2007 288 391

## Description

### TECHNICAL FIELD

The invention relates to the field of data security, and in particular to a data protection method and a data protection system.

### BACKGROUND

With the development of the internet, people can access the internet at anytime and anywhere, and interact instantly with people from different industries in different regions. Benefiting from the convenience created by internet technology, various cloud office collaboration systems have emerged. The cloud office mode has broken through the traditional office collaboration mode of enterprises. At present, many enterprises are increasingly developing toward the cloud office mode.

The cloud office mode is essentially a cloud computing technology that allows employees to access the network for office work at anytime and anywhere, while dividing the enterprise into the cells in human units and reorganizing them for cooperation at any time. In this way, efficiency is stimulated from individual to group, and at the same time, employee comfort is improved, and the office cost of the enterprise is reduced. The future advantages are apparent.

However, accompanied by convenience and efficiency to people's lives and business operations, the development of internet technology has increased the risk of data security. In recent years, various data security incidents occurred one after another. It is reported that there were 79,790 data breach incidents in 61 countries around the world in 2015, of which 2,122 incidents have been confirmed.

In order to make the cloud-based office computing technology based on internet technology develop healthily, data security issues must be solved. The existing data security technology still stays in the era of office mode, the basic idea of which is to draw a boundary for the flow of data and the data can flow freely within the boundary, but cannot go beyond the boundary. This data security technology cannot meet the requirements of the cloud office era any longer.

US Patent Application Publication No. US2005273629 A1 discloses a system for providing digital rights management of protected content that includes a client and a DRM manager. The client is capable of receiving at least one piece of content, the piece(s) of content being encrypted with at least one encryption key regardless of client user(s) authorized to access the piece(s) of encrypted content. To facilitate the client accessing one or more of the piece(s) of content, the DRM manager is capable of transferring the encryption key(s) to the client, the encryption key(s) being encrypted with a private key of a public key/private key pair unique to a client user associated with the client. The client can thereafter decrypt the encryption key(s) using the public key of the public key/private key pair unique to the client user. Then, the client can decrypt the piece(s) of content using the decrypted encryption key(s), and access the decrypted piece(s) of content.

EP Patent Application Publication No. 2400417 (EP 2400417A2) discloses a system for tracking usage of digital content on user devices. Electronic stores coupled to a network sell licenses to play digital content data to users. Content players, which receive from the network the licensed content data, are used to play the licensed content data. Additionally, a logging site that is coupled to the network tracks the playing of the content data. In particular, the logging site receives play information from the network, and the play information includes the number of times that the content data has been played by the associated content player. Also provided is a method for tracking usage of digital content on user devices. According to the method, a license to play digital content data is sold to a user, and the licensed content data is transmitted to a content player for the user; Further, information is transmitted to a logging site whenever the content data is played by the content player or copied from the content player to an external medium so that usage of the licensed content data can be tracked.

### SUMMARY

In the cloud office era, data flow has no boundaries. It doesn't matter where the data is, and people need not to concern where the data is. What matters is who has the authority to do what to do with the data. To this end, the embodiments of the present invention provide a method for protecting data by managing the usage authority of data, so that the use of data can break through the geographical limitations while improving security.

Specifically, the embodiment of the present invention provides a data protection method, performed by by a server according to claim 1: checking whether a data receiving party has a digital license that is generated by a data transmitting party and is in a valid state, at a time when the data receiving party is to decrypt encrypted data from the data transmitting party; and if so, permitting the data receiving party to use at least one key required in a data decryption process, wherein the data transmitting party being a data transmitting user terminal, wherein the data being divided into multiple parts, each of which being encrypted with a different key, the digital license stipulating corresponding key that the data receiving party has a permission to use, wherein permitting the data receiving party to use the at least one key required in the data decryption process comprising: transmitting, to the data receiving party, the corresponding key of the at least one key and/or related data required for using the corresponding key, according to license information in the digital license.

An embodiment of the present invention further provides a data protection system, including a server, according to claim 14, which includes a key management unit configured to generate or store at least one key based on a request of a data transmitting party. The server further comprising: a verification unit configured to check whether the data receiving party has a digital license in a valid state corresponding to a request of the data receiving party based on the request of the data receiving party, and if so, to permit the data receiving party to use the at least one key in the process of decrypting the encrypted data from the data transmitting party, wherein the data transmitting party being a data transmitting user terminal, wherein the data being divided into multiple parts, each of which being encrypted with a different key, the digital license stipulating corresponding key that the data receiving party has a permission to use, wherein the verification unit is configured to transmit to the data receiving party the corresponding key of the at least one key and/or related data required for using the corresponding key based on license information in the digital license.

According to the embodiment of the present invention, after obtaining the encrypted data from the data transmitting party, the data receiving party needs to apply to the server to obtain the authority to use the key required for the data decryption process. The server checks whether the receiving party has the use license for the key; if so, the decryption of data is permitted; and if not, decryption of data is not permitted. By managing the key and its use license, effective management and control to the data decryption authority can be realized, which greatly improves the data security of the cloud office era.

### BRIEF DESCRIPTION OF THE DRAWINGS

FIG. 1 is a flow chart of an embodiment of a data protection method of the present invention;
FIG. 2 is a flow chart of another embodiment of a data protection method of the present invention;
FIG. 3 is a flow chart of a specific embodiment of a data protection method of the present invention;
FIG. 4 is a flow chart of another specific embodiment of a data protection method of the present invention;
FIG. 5 is a flowchart of still another embodiment of a data protection method of the present invention; and
FIG. 6 is a block diagram of an embodiment of a data protection system of the present invention.

### DETAILED DESCRIPTION

Embodiments of the present invention will be described in detail below with reference to the accompanying drawings.

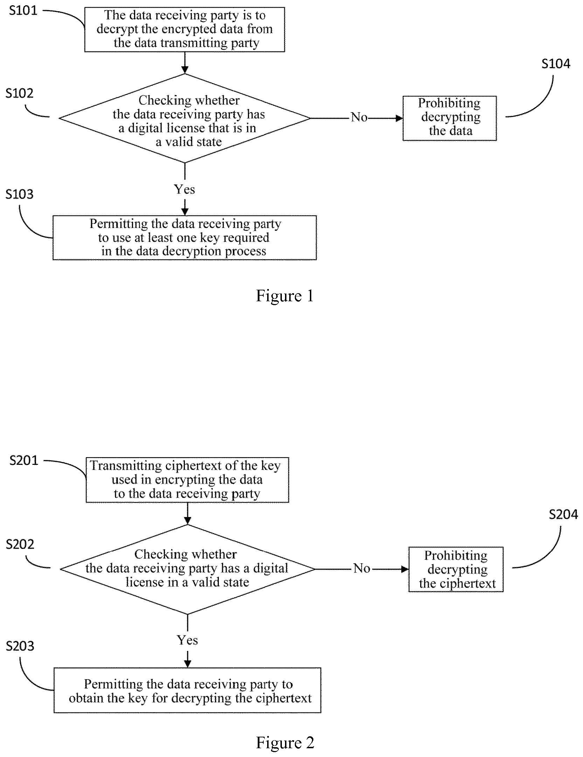

FIG. 1 is a flow chart of an embodiment of a data protection method of the present invention.

As shown in FIG. 1, the data protection method of this embodiment includes the following steps.

S101. A data receiving party is to decrypt the encrypted data from a data transmitting party.

The data transmitting party can transmit the encrypted data to the data receiving party, and the encrypted data is generated and transmitted after being encrypted by using a data encryption key by the data transmitting party. The data encryption key may be generated by the data transmitting party and then backed up in a server, or may be generated by the server in response to a request of the data transmitting party.

S102. Checking whether the data receiving party has a digital license in a valid state that is generated by the data transmitting party.

In various embodiments of the present invention, after obtaining the encrypted data from the data transmitting party, the data receiving party cannot directly obtain the data encryption key from the data transmitting party or directly decrypt the data using the key. Instead, the server is required to firstly check whether the data receiving party has a legal and valid digital license.

A legal data receiving party will hold a digital license issued by the data transmitting party. The data transmitting party can generate and transmit a digital license to the data receiving party or transmit the digital license to the server. The data transmitting party can also generate the digital license for the data receiving party on the server. The server can store the digital license after receiving the digital license or forward it to the data receiving party.

In the digital license, for example, the number of times that the receiving party uses the data, the period of use, whether it can be forwarded to others for use, whether the authority of the receiving party is limited to forwarding, whether data is permitted to be modified, or the like can be restricted.

Alternatively, in one embodiment of the present invention, for example, the number of times that the receiving party uses the data encryption key, the period of use, and the like can be restricted in the digital license.

The server's checking for the digital license may be triggered, for example, by a key usage request initiated by the data receiving party, or the checking may also be triggered, for example, by an action of decrypting the data after the data receiving party acquires the data encryption key from the server.

S103. If so, permitting the data receiving party to use at least one key required in the data decryption process.

In an embodiment of the invention, the data encryption key may be a set of direct or indirect keys for encrypting and decrypting the data and a collection of related data required to manage and use the set of keys.

The data receiving party can obtain the key required for the data decryption process or the related data required to use the key by making a key usage request to the server. When the server determines that the data receiving party holds the digital license in a valid state which is issued by the data transmitting party by checking, it is determined that the data receiving party has the authority to decrypt the encrypted data, and then the key required for the data decryption process such as the data encryption key or the key for encrypting the data encryption key is transmitted to the data receiving party, or the related data needed to use the key is transmitted to the data receiving party.

The server can check whether the data receiving party has a legal and valid digital license before or after issuing the key or the related use data thereof. Only after the check by the server is passed can the data receiving party obtain the authority to use the key required for the decryption process or the data related to the use of the key, thereby decrypting the encrypted data for use.

According to the embodiment of the present invention, after obtaining the encrypted data from the data transmitting party, the data receiving party needs to apply to the server to obtain the authority to use the key required for the data decryption process. The server checks whether the receiving party has the use license for the key. If so, the decryption of the data is permitted. If not, it does not permit the decryption of data. By managing the key and its use license, it can effectively manage and control data encryption and decryption, greatly improving data security in the cloud office era.

As an example, in an embodiment of the present invention, S103 may be specifically implemented as follows: the server permits the data receiving party to use the corresponding key in the at least one key on the server and/or related data required for using the corresponding key according to the license information contained in the digital license in response to the request from the data receiving party or after checking to determine that the valid digital license exists.

In the above embodiment of the present invention, the encrypted data can be generated by encrypting the target data using a plurality of keys. The data is divided into multiple parts, each part being encrypted with a different key. Correspondingly, the digital license may not only include the aforementioned limitation of the number of times the receiving party uses the data encryption key, the period of use, etc., but also stipulate the part of the key that the data receiving party has a permission to use. The highest privilege of the data receiving party is the ability to use a key that is used to encrypt every part of the above data. In this way, after checking the digital license of the data receiving party and determining that it is valid, the server may issue the part of the key or key usage related data that is authorized to the data receiving party for use and recorded in the digital license to the data receiving party for use.

In this way, the data may not be differently encrypted separately for users with different authorities, but it may be realized that the users with different authorities obtain the part of data which he/she has the authority to use by permitting the use of the corresponding keys among the plurality of data encryption keys.

In an embodiment of the present invention, a key management module is installed on a terminal of the data receiving party to provide a professional and secure key management service for the user. In this case, S103 may be specifically implemented as follows: the server transmits at least one key and/or related data required for using the at least one key to a key management module of the data receiving party in response to the request of the data receiving party or after checking to determine that there is a valid digital license.

In the above embodiment of the present invention, by providing the key management module for the terminal of the data receiving party, the request, reception, and use of the related key can be performed by the key management module, which provides convenience for the user of the data receiving party. At the same time, the data transmitting party can also manage the generation and use of keys through a similar key management module on its terminal.

In a further embodiment of the invention, the key and/or the related data required to use the key received and used by the key management module are not visible to the user of the data transmitting party or the user of the data receiving party. In this embodiment of the invention, the key is maintained, used, and streamed in a system constituted by the key management module and the server, and the user of the data transmitting party and/or data receiving party can only use the key through the key management module, but cannot see the specific key and its data structure.

For example, after the user of the data receiving party makes a key usage request to the server by operating the key management module and checks the data license by the server, the encrypted data obtained from the data transmitting party is imported into the key management module. After decrypting the data by the key management module using the key issued by the server internally and the decrypted data is exported.

In addition, the user of the data transmitting party can also import the data that needs to be encrypted into the key management module on its terminal when the data that need to be encrypted exist, and the key management module encrypts the data by using the key internally and exports the same. With this embodiment of the present invention, the key cannot be modified or copied in each process of generating, using, and transmitting, which greatly improves the data security.

FIG. 2 is a flow chart of another embodiment of a data protection method of the present invention.

As shown in FIG. 2, in the embodiment, the data protection method includes the steps of:
S201. Transmitting to the data receiving party a ciphertext of the key used in encrypting the data;
S202. Checking whether the data receiving party has a digital license in a valid state;
S203. If so, permitting the data receiving party to obtain the key for decrypting the ciphertext; and
S204. If not, prohibiting the data receiving party from decrypting the ciphertext.

In the present embodiment, before the server checks whether the data receiving party has the digital license in the valid state, the ciphertext of the key used for encrypting the data may be directly transmitted to the data receiving party, or the ciphertext may be transmitted to the data receiving party in response to the request of the data receiving party. The ciphertext may be transmitted by the server in response to the request of the data receiving party, or may be transmitted by the server to the data receiving party in response to the request of the data transmitting party, or may be directly transmitted by the data transmitting party to the data receiving party.

The approach of transmitting the ciphertext of the key is not limited. For example the ciphertext of the key may be transmitted separately, and may also be transmitted simultaneously with the encrypted data, or transmitted to the data receiving party together with the digital license. In the case where the ciphertext of the key is transmitted together with the digital license, the ciphertext of the key can also be included in the digital license.

In an embodiment in which the terminal of the data receiving party has a key management module, the ciphertext can be transmitted to the key management module of the data receiving party.

In this embodiment of the present invention, after obtaining the encrypted data (alternatively, before or at the same time obtaining the encrypted data), the data receiving party can obtain the ciphertext of the data encryption key directly from the data transmitting end or the server, and then determines whether it is able to gain access to the key that is used to decrypt the ciphertext according to the results of the server's check on the digital license, and then decrypts the encrypted data with the decrypted data encryption key. In this embodiment, by further encrypting the data encryption key, it is possible to avoid a security risk that may occur due to direct transfer of the data encryption key.

In various embodiments of the present invention, the data transmitting party may include only one data transmitting end, and may also include multiple data transmitting ends. When the data transmitting party includes only one data transmitting end, the data transmitting end transmits the encrypted data to the data receiving party, and issues a digital license regarding the data usage authority or the key usage authority to the data receiving party.

When the data transmitting party includes multiple data transmitting ends, for example, when a data transmitting end transmits the encrypted data to a data receiving end, a digital license is issued to the data receiving end to authorize the use of the data, and then the data receiving end may become a new data transmitting end that transmits the encrypted data to another data receiving end as the data receiving party. At this time, the new data transmitting end can issue the digital license concerning the data usage authority or the key usage authority to the data receiving party, so that the original data transmitting end and the new data transmitting end together constitute the data transmitting party. However, the embodiment of the present invention is not limited thereto. For example, when the new data transmitting end only has the authority to forward the encrypted data, the digital license is still issued by the original data transmitting end to the data receiving party.

In an embodiment of the present invention, the data receiving party user can log in to the server through the key management module using the account information, and the server can check whether the data receiving party has a valid digital license in a storage device of the server based on the user account logged in by the data receiving party. In this embodiment, the server may store the digital license of the user in association with the account information and the identification number of the encrypted data to facilitate the query.

In one embodiment of the invention, a part or all of the digital license may be directly encrypted with a public key of the data receiving party. In this way, digital licenses can be prevented from being fraudulently used by a person other than the user of the data receiving party.

In another embodiment of the invention, a part or all of the digital license may be indirectly encrypted with the public key of the data receiving party. For example, a part or all of the digital license may be encrypted with a key, and then the key is encrypted with the data receiving party's public key and transmitted to the data receiving party. Thus, it is possible to further prevent the digital license from being fraudulently used by a person other than the user of the data receiving party.

In various embodiments of the invention, the data can be encrypted in a variety of ways.

For example, the data transmitting party can encrypt the data with more than one key to generate the encrypted data. When multiple keys are used to encrypt different portions of the data, the server may issue those keys that the data receiving party is entitled to use to the data receiving party according to the usage authorities recorded in the legal digital license.

In addition, the data transmitting party can also encrypt the data by using both one or more keys and the receiving party's public key to generate the encrypted data. In particular, the data may first be encrypted by using the one or more keys, and then encrypted by the public key of the receiving party. Alternatively, the data may first be encrypted by using the public key of the receiving party, and then the data is encrypted by using the one or more keys. In this way, the security of the data can be improved.

As an embodiment of the present invention, the data transmitting party may first encrypt the data with the first predetermined key to generate the encrypted data, and then encrypt the first predetermined key. There may be multiple embodiments for encrypting the first predetermined key. For example, the first predetermined key may be directly encrypted with one or more keys, or one or more keys may be used together with the public key of the receiving party to encrypt the different portions of the first predetermined key or to encrypt the first predetermined key with one or more keys and the public key of the receiving party successively.

In addition, the data transmitting party may first encrypt the data with the first predetermined key to generate the encrypted data, then encrypt the first predetermined key using the second predetermined key, and then use more than one keys together with the public key of the receiving party to encrypt the different portions of the second predetermined key or to encrypt the second predetermined key with one or more keys and the public key of the receiving party successively.

The ciphertext of the first predetermined key and/or the ciphertext of the second predetermined key may be transmitted to the data receiving party together with the encrypted data or may be transmitted to the data receiving party separately from the encrypted data, while the server retains the above one or more keys. After verifying the digital license of the data receiving party, the server issues the key and the data related to usage of the key that are used to decrypt the key ciphertext together or separately to the data receiving party.

In various embodiments of the present invention, the digital license includes the license information regarding the number of use, the period of use, and/or the region of use of the data, or may include license information regarding the number of use, the period of use, and/or the region of use of the key. Different types of digital licenses can be employed depending on different embodiments.

In various embodiments of the present invention, the data transmitting party may use the AES algorithm, the Camellia algorithm, or the DES algorithm to encrypt the data to generate the encrypted data, but the encryption algorithm that can be used in the present invention is not limited to these algorithms, but may also use various custom encryption algorithms.

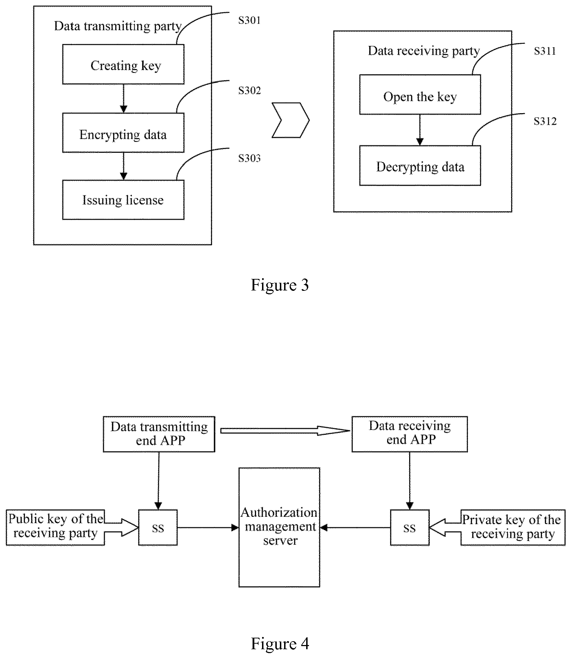

FIG. 3 is a flow chart of a specific embodiment of a data protection method of the present invention.

As shown in FIG. 3, this embodiment includes the steps performed by the data transmitting party and the data receiving party separately.

First, the data transmitting party performs the following steps:

### S301. Creating the data encryption key

The data transmitting party can create the data encryption key in the server through the key management module on its terminal, or make a backup in the server after creating the data encryption key in the key management module. The data encryption key here is a set of keys for directly or indirectly encrypting and decrypting data and a collection of related data required for managing and using the set of keys. The data encryption key is maintained by a key security system (for example, the server), and the user can only use the data encryption key and cannot see the specific key and data structure.

The data transmitting party can specify an algorithm to encrypt the data when creating the data encryption key. The data encryption algorithm may be a standard encryption algorithm such as AES, Camellia, or DES, or a system custom algorithm.

### S302. Encrypting data

The data transmitting party encrypts the data to be transmitted using the data encryption key created in S301. The process of encrypting the data to be transmitted may include using the public key of the data receiving party to participate in the encryption of the data for increasing security. Specifically, the public key of the data receiving party may be used to encrypt the data firstly, and then the data encryption key is used for secondary encryption. Alternatively, a session key which is encrypted by the public key of the data receiving party and the data encryption key together, may be used for encrypting the data.

### S303. Issuing license

In this step, the data transmitting party issues a use license for the data encryption key to the data receiving party. The use license for the data encryption key is a credential for using the data encryption key, and only the user who owns the credential can use the data encryption key. The data transmitting party can use the receiving party's public key to encrypt a part or all contents of the digital license in the process of issuing the digital license to the data receiving party, thereby preventing the data license from being fraudulently used by others.

It should be noted that the execution order of S303 and S302 is not limited. S302 may be executed first and then S303 may be executed, or S303 may be executed first and then S302 may be executed.

The steps performed by the data receiving party in FIG. 3 will be described below.

### S311. Opening the key

In this step, the data receiving party finds and opens the key. Here, opening the key means that the data receiving party submits an application for use of the key to the server, and obtains the context data related to the usage of the key. The process of opening the key may include checking, by the server, whether the data receiving party has the valid digital license to use the key, and if there is the valid digital license to use the key, the server issues the context data related to the usage of the key to enable the data receiving party to successfully open the key, otherwise the key cannot be opened. Alternatively, checking the digital license can also be performed in S312.

If the data receiving party encrypted the digital license with the public key of the receiving party in S303, the data receiving party can use its own private key to decrypt the encrypted partial content of the digital license when or before the server checks the digital license.

### S312. Decrypting data

In this step, the data receiving party decrypts the data using the context data related to the usage of the key obtained in S311.

If the key usage permission of the data receiving party is not checked in S311, a check of whether the data receiving party has the use license for the key should be included in S312.

In the process of the data decryption, if the public key of the data receiving party is used to participate in the encryption operation of the data or the key when encrypting the data in S302, the private key of the receiving party is also need to be used to decrypt the data correctly when the data or the key is decrypted in S312. Further, if the session key is jointly encrypted with the public key of the data receiving party and the data encryption key after encrypting the data with the session key in S302, the decryption process of S312 includes decrypting the session key using the private key of the receiving party and the data encryption key.

FIG.4 is a flow chart of a specific embodiment of the data protection method of the present invention.

As shown in FIG. 4, in the embodiment, the terminal of the data transmitting party is installed with a security middleware SS as the key management module and a data transmitting end APP (application), and the terminal of the data receiving party is installed with a security middleware SS as the key management module and a data transmitting party APP, and the two SSs are each connected to an authorization management server.

According to FIG. 4, the data transmitting end APP first creates a data encryption key on the authorization management server through the SS, and the SS of the data transmitting end can also use the data encryption key.

Then, the data transmitting end APP submits the data that need to be encrypted to the SS of the data transmitting end, and the SS of the data transmitting end encrypts the data by using the data encryption key previously created on the server, and returns the encrypted data to the data transmitting end APP. In the process of encrypting data, the SS can use the public key of the receiving party together with the data encryption key to encrypt the data. For example, the data is encrypted firstly by using the session key, and then the session key is jointly encrypted by using the public key of the receiving party and the data encryption key.

After encrypting the data, the data transmitting end issues the digital license for the data encryption key to the data receiving end through the SS. The public key of the receiving party may be used to encrypt a part or all of the digital license in the process of issuing the digital license for the data encryption key.

After receiving the encrypted data from the data transmitting party, the data receiving end APP applies to the authorization management server to use the above data encryption key created by the data transmitting party through the SS of the data receiving end. The authorization management server checks whether the data receiving party has the valid digital license for the data encryption key. If there is no digital license, or the digital license is invalid, for example, expired, the data receiving end is not permitted to use the data encryption key.

Alternatively, the authorization management server may first transmit the data encryption key to the SS of the data receiving party, and then check whether the data receiving party has the digital license when the SS of the data receiving party starts decrypting the data.

If the data transmitting party encrypts the digital license with the public key of the data receiving party when issuing the digital license, the data receiving end can use the private key of the receiving party to decrypt the encrypted portion of the digital license.

The data receiving end uses the private key of the receiving party and the data encryption key on the authorization management server to jointly decrypt the data. If the server does not check the digital license before the SS of the data receiving end receives the data encryption key, the server may check the digital license for the data encryption key when the SS uses the data encryption key.

After the check of the server is passed, the SS of the data receiving end decrypts the encrypted data, and returns the decrypted data to the data receiving end APP.

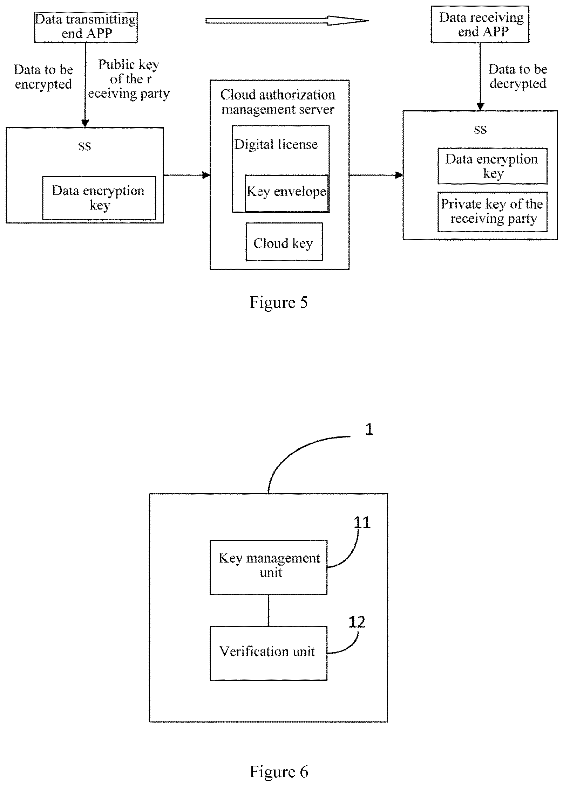

FIG. 5 is a flow chart of still another embodiment of the data protection method of the present invention. In the embodiment, the terminal of the data transmitting party is installed with the security middleware SS as the key management module and the data transmitting end APP (application), and the terminal of the data receiving party is installed with the security middleware SS as the key management module and the data receiving party APP, and the two SSs are each connected to the cloud authorization management server.

As shown in FIG. 5, firstly, the data transmitting end creates a key. When the key is created, a data encryption key for directly encrypting the data is created in the SS, and a cloud key is created on the cloud authorization management server. The data encryption key in this embodiment is an AES key.

Subsequently, the data transmitting end APP submits the data to be encrypted and the public key of the receiving party to the SS of the data transmitting end, and the SS encrypts the data using the data encryption key. Accordingly, the encryption algorithm used when encrypting the data is an AES algorithm.

The data transmitting end also transmits the digital license to the data receiving party through the SS. The license may include restrictions on the use of the data by the receiving party. For example, the number of times, the time limit and the like for the receiving party to use the data may be limited. At the same time, the digital license may include a ciphertext of the data key obtained by jointly encrypting the data key by using the public key of the receiving party and the cloud key by the data transmitting end SS. For example, the data transmitting end SS may firstly encrypt the data key using the session key, and then divide the session key into two parts, one part is encrypted by the cloud key, and the other part is encrypted by the public key of the receiving party .

After receiving the ciphertext data, the data receiving end applies to the cloud authorization management server for using the data encryption key created by the data receiving end through the receiving end SS. After receiving the application for use, the cloud authorization management server checks whether the data receiving end has the valid digital license. If so, it permits the data receiving end to use the cloud key. If not, it reports an error. The valid digital license means a digital license that does not exceed the usage limitation, such as a digital license within a valid period, or a digital license that has not been used for a specified number of times, and the like.

After obtaining the permission of the server, the data receiving end SS decrypts a key envelope by using both the private key of the receiving party and the cloud key to restore the data key. Specifically, the data receiving end SS decrypts the respective encrypted parts of session keys by using the private key of the receiving party and the cloud key, and decrypts the data key with the session key.

After obtaining the data key, the data receiving end SS decrypts the data to be decrypted by using the data key. Accordingly, the algorithm used to decrypt the data is also the AES algorithm.

As an example, the two parts divided by the session key in the embodiment shown in FIG. 5 are respectively encrypted by the cloud key and the public key of the receiving party, but the present invention is not limited thereto. For example, the session key can be divided into more than two parts, one part of which is encrypted by the receiving party's public key, the other parts are respectively encrypted by multiple cloud keys. Alternatively, the session key is divided into multiple parts, the multiple parts are separately encrypted by multiple cloud keys.

Various embodiments of the data protection system of the present invention are described below.

FIG. 6 is a block diagram of one embodiment of a data protection system of the present invention.

As shown, the system according to the embodiment of the present invention includes a server 1, which includes a key management unit 11 and a verification unit 12.

The key management unit 11 is configured to generate or store at least one key based on a request from the data transmitting party. Specifically, the key may be generated in the key management unit 11 based on the request of the data transmitting party, or may be stored in the key management unit 11 of the server 1 after the data transmitting party generates it.

The verification unit 12 is configured to check whether the data receiving party has the digital license in the valid state corresponding to the request based on the request of the data receiving party, and if so, to permit the data receiving party to use at least one key in the key management unit 11 in the process of decrypting the encrypted data from the data transmitting party.

The verification of the digital license by the verification unit 12 may be triggered, for example, by a key usage request initiated by the data receiving party, or the check may also be triggered, for example, by a decryption action on the data performed by the data receiving party. A legitimate data receiving party will hold the digital license issued by the data transmitting party. The data transmitting party may generate a digital license and transmit it to the data receiving party or transmit the digital license to the server 1. The data transmitting party can also generate the digital license for the data transmitting party on the server 1. The server 1 may further include a digital license management unit (not shown) for generating or storing the digital license in response to a request of the data transmitting party or for transmitting the digital license to the data receiving party via the communication unit.

In an embodiment of the invention, the data encryption key may be a set of keys for directly or indirectly encrypting and decrypting the data and a collection of related data required for managing and using the set of keys.

The data receiving party may make a request for the use of the key to the server. When the verification unit 12 determines that the data receiving party holds the digital license in the valid state issued by the data transmitting party, it is determined that the data receiving party has the authority to decrypt the encrypted data. Then the data receiving party is permitted to use the data encryption key or the key of the key envelope or the related data needed to use the key.

The verification unit 12 may check whether the data receiving party has the legal and valid digital license before or after issuing the key or related data. Only after the check by the verification unit 12 is passed, the data receiving party can gain access to the key or the data related to use of the key required for the decryption process, thereby decrypting the encrypted data for use.

The embodiment of the present invention realizes effective management and control of data encryption and decryption by managing the key and its use license, thereby greatly improving the data security in the cloud office era.

In one embodiment of the present invention, the verification unit 12 may be configured to permit the data receiving party to use a corresponding key of the at least one key and/or related data required for using the corresponding key based on the license information in the digital license. The present embodiment is applicable to a case where multiple parts of the data are encrypted with different keys. After checking the digital license of the data receiving party and determining the validity, the verification unit 12 can issue the part of the key or data related to e use of the key authorized for use by the digital receiving party as recorded in the digital license to the data receiving party for use.

In an embodiment of the present invention, the data protection system may further include a key management module (not shown) connected to or installed on the terminal of the data receiving party. The verification unit 12 is configured to transmit the at least one key and/or the related data required for using the at least one key to the data management module of the data receiving party. By providing the key management module for the data receiving party's terminal, the request, reception, and use of the key can be performed by the key management module, which provides convenience for the user of the data receiving party.

In another embodiment of the present invention, the verification unit 12 is configured to transmit, to the data receiving party, a ciphertext of a first predetermined key used to encrypt the data or a ciphertext of a second predetermined key used to encrypt the first predetermined key before checking whether the data receiving party has the valid digital license. The ciphertext may be transmitted by the server 1 in response to the request of the data receiving party, or be transmitted by the server 1 to the data receiving party in response to the request of the data transmitting party, or directly transmitted by the data transmitting party to the data receiving party. In an embodiment in which the terminal of the data receiving party has the key management module, the ciphertext can be transmitted to the key management module of the data receiving party.

In this embodiment of the present invention, after obtaining the encrypted data (or before or at the same time obtaining the encrypted data), the data receiving party can obtain the ciphertext of the data encryption key or the ciphertext of the key used for encrypting the data encryption key directly from the data transmitting end or the server, and then determine whether it is entitled to obtain the key for decrypting the ciphertext according to the result of the server's check on the digital license, thereby obtaining the data encryption key. In this embodiment, by further encrypting the data encryption key, it is possible to avoid the security risk that may occur due to direct transfer of the data encryption key.

In various embodiments of the present invention, the data transmitting party may include a first data transmitting end and a second data transmitting end, the key management unit 11 generates at least one key based on the request of the first data transmitting end, and the digital license is generated by the first the data transmitting end or the second data transmitting end. When the server 1 includes a digital license management unit, it can generate, store, or forward the digital licenses in response to a request of the first data transmitting end or the second data transmitting end.

In various embodiments of the present invention, the key management module 11 is configured such that the at least one key and/or the related data are not visible to a user of the data receiving party. In this embodiment of the present invention, the key is maintained, used, and streamed in the system constituted by the key management module and the server, and the user of the data transmitting party and/or data receiving party can only use the key through the key management module, but cannot see the specific key and its data structure, which greatly improves the security of the key.

In one embodiment of the invention, the verification unit 12 is configured to check whether the data receiving party has the digital license in the valid state based on the user account logged in by the data receiving party. The user of the data receiving party can log into the server through the key management module using the account information. In the present embodiment, the server may store the digital license of the user in association with the account information and the identification number of the encrypted data to facilitate the checking of the digital license.

In an embodiment of the present invention, when the digital license management unit on the data transmitting party or server generates the digital license, at least a portion of the digital license may be encrypted with the public key of the data receiving party, or at least a portion of the digital license may be encrypted with the key, and the key is encrypted with the public key of the data receiving party. In this way, the digital licenses can be prevented from being fraudulently used by a person other than the user of the data receiving party. The invention is defined by the appended claims.

## Claims

1. A data protection method, performed by a server, the method comprising:
checking whether a data receiving party has a digital license that is generated by a data transmitting party and is in a valid state (S 102), at a time when the data receiving party is to decrypt encrypted data from the data transmitting party (S101), and if so, permitting the data receiving party to use at least one key required in a data decryption process (S103),
wherein the data transmitting party being a data transmitting user terminal, and
wherein the data being divided into multiple parts, each of which being encrypted with a different key, the digital license stipulating the corresponding key that the data receiving party has a permission to use,
wherein permitting the data receiving party to use the at least one key required in the data decryption process comprising: transmitting, to the data receiving party, the corresponding key of the at least one key and/or related data required for using the corresponding key, according to license information in the digital license.

2. The data protection method according to claim 1, wherein permitting the data receiving party to use the at least one key required in the data decryption process further comprises:
transmitting, to a key management module of the data receiving party, the at least one key and/or related data required for using the at least one key.

3. The data protection method according to claim 1, further comprising transmitting to the data receiving party a ciphertext of a first predetermined key used for encrypting the data (S201) before checking whether the data receiving party has the digital license in the valid state (S202).

4. The data protection method according to claim 3 further comprising: transmitting to the data receiving party a ciphertext of a second predetermined key used for encrypting the data before checking whether the data receiving party has the digital license in the valid state, the second predetermined key being used for encrypting the first predetermined key used for encrypting the data.

5. The data protection method according to claim 1, wherein the data transmitting party comprises two or more data transmitting ends, and the encrypted data and the digital license are generated by the same data transmitting end or by different data transmitting ends.

6. The data protection method according to any one of claims 1 to 5, wherein the at least one key and/or the related data are invisible to a user of the data transmitting party and/or a user of the data receiving party.

7. The data protection method according to any one of claims 1 to 5, further comprising:
checking whether the data receiving party has the digital license in the valid state based on a user account logged in by the data receiving party.

8. The data protection method according to any one of claims 1 to 5, wherein at least a part of the digital license is directly or indirectly encrypted with a public key of the data receiving party.

9. The data protection method according to any one of claims 1 to 5, wherein the encrypted data is generated by encrypting the data with the at least one key.

10. The data protection method according to any one of claims 1 to 5, wherein the encrypted data is generated by encrypting data with the at least one key and a public key of the data receiving party.

11. The data protection method according to any one of claims 1 to 5, wherein the encrypted data is generated by encrypting the data with a first predetermined key, the at least one key participating in an encryption process for the first predetermined key.

12. The data protection method according to claim 11, wherein the at least one key participates in the encryption process for the first predetermined key comprising:
encrypting the first predetermined key using the at least one key; or
the first predetermined key is encrypted using the at least one key and a public key of the data receiving party.

13. The data protection method according to any one of claims 1 to 5, wherein the encrypted data is generated by encrypting the data with a first predetermined key, the first predetermined key is encrypted using a second predetermined key, and the second predetermined key is encrypted using the at least one key and a public key of the data receiving party.

14. A data protection system, comprising a server, which comprises a key management unit (11) configured to generate or store at least one key based on a request of a data transmitting party; the server further comprising:
a verification unit (12) configured to check whether the data receiving party has a digital license in a valid state corresponding to a request of the data receiving party based on the request of the data receiving party, and if so, to permit the data receiving party to use the at least one key in the process of decrypting the encrypted data from the data transmitting party,
wherein the data transmitting party being a data transmitting user terminal, and
wherein the data being divided into multiple parts, each of which being encrypted with a different key, the digital license stipulating the corresponding key that the data receiving party has a permission to use,
wherein the verification unit (12) is configured to transmit to the data receiving party the corresponding key of the at least one key and/or related data required for using the corresponding key based on license information in the digital license.

## Patentansprüche

1. Datenschutzverfahren, das von einem Server durchgeführt wird, wobei das Verfahren umfasst:
Überprüfen, ob eine Daten-empfangende Partei eine digitale Lizenz hat, die von einer Daten-übermittelnden Partei erzeugt wird und sich in einem gültigen Zustand (S102) befindet, zu einem Zeitpunkt, wenn die Daten-empfangende Partei verschlüsselte Daten von der Daten-übermittelnden Partei zu entschlüsseln hat (S101), und, wenn ja, Erlauben der Daten-empfangenden Partei, zumindest einen Schlüssel zu benutzen, der in einem Daten-Entschlüsselungsprozess (S103) erfordert wird,
worin die Daten-übermittelnde Partei eine Daten-übermittelnde Benutzerstation ist,
und
worin die Daten in mehrere Teile geteilt werden, wovon jeder mit einem verschiedenen Schlüssel verschlüsselt wird, wobei die digitale Lizenz den entsprechenden Schlüssel festlegt, für welchen die Daten-empfangende Partei eine Erlaubnis zur Benutzung hat,
worin das Erlauben der Daten-empfangenden Partei, den zumindest einen Schlüssel zu benutzen, der in dem Daten-Entschlüsselungsprozess erfordert wird, umfasst: Übermitteln, der Daten-empfangenden Partei, des entsprechenden Schlüssels des zumindest einen Schlüssels und/oder von zugehörigen Daten, die zur Benutzung des entsprechenden Schlüssels erfordert werden, nach Lizenzinformationen in der digitalen Lizenz.

2. Datenschutzverfahren nach Anspruch 1, worin das Erlauben der Daten-empfangenden Partei, den zumindest einen Schlüssel zu benutzen, der in dem Daten-Entschlüsselungsprozess erfordert wird, ferner umfasst:
Übermitteln, einem Schlüsselverwaltungsmodul der Daten-empfangenden Partei, des zumindest einen Schlüssels und/oder von zugehörigen Daten, die zur Benutzung des zumindest einen Schlüssels erfordert werden.

3. Datenschutzverfahren nach Anspruch 1, ferner umfassend das Übermitteln der Daten-empfangenden Partei eines chiffrierten Textes eines ersten vorbestimmten Schlüssels, der zum Verschlüsseln der Daten (S201) benutzt wird, bevor es überprüft wird, ob die Daten-empfangende Partei die digitale Lizenz im gültigen Zustand (S202) hat.

4. Datenschutzverfahren nach Anspruch 3, ferner umfassend:
Übermitteln der Daten-empfangenden Partei eines chiffrierten Textes eines zweiten vorbestimmten Schlüssels, der zum Verschlüsseln der Daten benutzt wird, bevor es überprüft wird, ob die Daten-empfangende Partei die digitale Lizenz im gültigen Zustand hat, wobei der zweite vorbestimmte Schlüssel benutzt wird, um den ersten vorbestimmten Schlüssel zu verschlüsseln, der zum Verschlüsseln der Daten benutzt wird.

5. Datenschutzverfahren nach Anspruch 1, worin die Daten-übermittelnde Partei zwei oder mehrere Daten-übermittelnde Enden umfasst, und die verschlüsselten Daten und die digitale Lizenz von demselben Daten-übermittelnden Ende oder von verschiedenen Daten-übermittelnden Enden erzeugt werden.

6. Datenschutzverfahren nach einem der Ansprüche 1 bis 5, worin der zumindest eine Schlüssel und/oder die zugehörigen Daten für einen Benutzer der Daten-übermittelnden Partei und/oder einen Benutzer der Daten-empfangenden Partei unsichtbar sind.

7. Datenschutzverfahren nach einem der Ansprüche 1 bis 5, ferner umfassend:
Überprüfen, ob die Daten-empfangende Partei die digitale Lizenz im gültigen Zustand hat, aufgrund eines Benutzerkontos, das von der Daten-empfangenden Partei eingeloggt wird.

8. Datenschutzverfahren nach einem der Ansprüche 1 bis 5, worin zumindest ein Teil der digitalen Lizenz mit einem öffentlichen Schlüssel der Daten-empfangenden Partei direkt oder indirekt verschlüsselt wird.

9. Datenschutzverfahren nach einem der Ansprüche 1 bis 5, worin die verschlüsselten Daten durch Verschlüsseln der Daten mit dem zumindest einen Schlüssel erzeugt werden.

10. Datenschutzverfahren nach einem der Ansprüche 1 bis 5, worin die verschlüsselten Daten durch Verschlüsseln von Daten mit dem zumindest einen Schlüssel und einem öffentlichen Schlüssel der Daten-empfangenden Partei erzeugt werden.

11. Datenschutzverfahren nach einem der Ansprüche 1 bis 5, worin die verschlüsselten Daten durch Verschlüsseln der Daten mit einem ersten vorbestimmten Schlüssel erzeugt werden, wobei der zumindest eine Schlüssel an einem Verschlüsselungsprozess für den ersten vorbestimmten Schlüssel teilnimmt.

12. Datenschutzverfahren nach Anspruch 11, worin der zumindest eine Schlüssel an dem Verschlüsselungsprozess für den ersten vorbestimmten Schlüssel teilnimmt, der umfasst:
Verschlüsseln des ersten vorbestimmten Schlüssels durch Verwendung des zumindest einen Schlüssels, oder
der erste vorbestimmte Schlüssel durch Verwendung des zumindest einen Schlüssels und eines öffentlichen Schlüssels der Daten-empfangenden Partei verschlüsselt wird.

13. Datenschutzverfahren nach einem der Ansprüche 1 bis 5, worin die verschlüsselten Daten durch Verschlüsseln der Daten mit einem ersten vorbestimmten Schlüssel erzeugt werden, wobei der erste vorbestimmte Schlüssel durch Verwendung eines zweiten vorbestimmten Schlüssels verschlüsselt wird, und der zweite vorbestimmte Schlüssel durch Verwendung des zumindest einen Schlüssels und eines öffentlichen Schlüssels der Daten-empfangenden Partei verschlüsselt wird.

14. Datenschutzsystem, umfassend einen Server, der eine Schlüsselverwaltungseinheit (11) umfasst, die dazu eingerichtet ist, zumindest einen Schlüssel aufgrund einer Anforderung einer Daten-übermittelnden Partei zu erzeugen oder abzuspeichern;
wobei der Server ferner umfasst:
eine Überprüfungseinheit (12), die dazu eingerichtet ist, zu überprüfen, ob die Daten-empfangende Partei eine digitale Lizenz in einem gültigen Zustand hat, die einer Anforderung der Daten-empfangenden Partei aufgrund der Anforderung der Daten-empfangenden Partei entspricht, und, wenn ja, der Daten-empfangenden Partei zu erlauben, den zumindest einen Schlüssel in dem Prozess des Entschlüsselns der verschlüsselten Daten von der Daten-übermittelnden Partei zu benutzen,
worin die Daten-übermittelnde Partei eine Daten-übermittelnde Benutzerstation ist,
und
worin die Daten in mehrere Teile geteilt werden, wovon jeder mit einem verschiedenen Schlüssel verschlüsselt wird, die digitale Lizenz den entsprechenden Schlüssel festlegt, für welchen die Daten-empfangende Partei eine Erlaubnis zur Benutzung hat,
worin die Überprüfungseinheit (12) dazu eingerichtet ist, der Daten-empfangenden Partei den entsprechenden Schlüssel des zumindest einen Schlüssels und/oder zugehörige Daten, die zur Benutzung des entsprechenden Schlüssels erfordert werden, aufgrund von Lizenzinformationen in der digitalen Lizenz zu übermitteln.

## Revendications

1. Procédé de protection de données, exécuté par un serveur, le procédé comprenant les étapes consistant à :
vérifier si une partie de réception de données dispose d'une licence numérique qui est générée par une partie de transmission de données et est dans un état valide (S 102), à un moment où la partie de réception de données doit déchiffrer des données chiffrées de la partie de transmission de données (S 101) et, le cas échéant, permettre à la partie de réception de données d'utiliser au moins une clé requise dans un processus de déchiffrement de données (S 103),
dans lequel la partie de transmission de données est un terminal utilisateur de transmission de données, et
dans lequel les données sont divisées en de multiples parties, chacune desquelles étant chiffrée avec une clé différente, la licence numérique stipulant la clé correspondante que la partie de réception de données a la permission d'utiliser,
dans lequel permettre à la partie de réception de données d'utiliser l'au moins une clé requise dans le processus de déchiffrement de données comprend : transmettre, à la partie de réception de données, la clé correspondante de l'au moins une clé et/ou des données connexes requises pour utiliser la clé correspondante, en fonction des informations de licence dans la licence numérique.

2. Procédé de protection de données selon la revendication **1,** dans lequel permettre à la partie de réception de données d'utiliser l'au moins une clé requise dans le processus de déchiffrement de données comprend en outre :
transmettre, à un module de gestion de clé de la partie de réception de données, l'au moins une clé et/ou les données connexes requises pour utiliser l'au moins une clé.

3. Procédé de protection de données selon la revendication 1, comprenant en outre l'étape consistant à transmettre à la partie de réception de données un texte chiffré d'une première clé prédéterminée utilisée pour chiffrer les données (S201) avant de vérifier si la partie de réception de données a la licence numérique dans l'état valide (S202).

4. Procédé de protection de données selon la revendication 3 comprenant en outre les étapes consistant à :
transmettre à la partie de réception de données un texte chiffré d'une seconde clé prédéterminée utilisée pour chiffrer les données avant de vérifier si la partie de réception de données a la licence numérique dans l'état valide, la seconde clé prédéterminée étant utilisée pour chiffrer la première clé prédéterminée utilisée pour chiffrer les données.

5. Procédé de protection de données selon la revendication 1, dans lequel la partie de transmission de données comprend deux ou plusieurs extrémités de transmission de données, et les données chiffrées et la licence numérique sont générées par la même extrémité de transmission de données ou par des extrémités de transmission de données différentes.

6. Procédé de protection de données selon l'une quelconque des revendications 1 à 5, dans lequel l'au moins une clé et/ou les données connexes sont invisibles pour un utilisateur de la partie de transmission de données et/ou un utilisateur de la partie de réception de données.

7. Procédé de protection de données selon l'une quelconque des revendication 1 à 5, comprenant en outre l'étape consistant à :
vérifier si la partie de réception de données a la licence numérique dans l'état valide sur la base d'un compte d'utilisateur connecté par la partie de réception de données.

8. Procédé de protection de données selon l'une quelconque des revendications 1 à 5, dans lequel au moins une partie de la licence numérique est chiffrée directement ou indirectement avec une clé publique de la partie de réception de données.

9. Procédé de protection de données selon l'une quelconque des revendications 1 à 5, dans lequel les données chiffrées sont générées en chiffrant les données avec l'au moins une clé.

10. Procédé de protection de données selon l'une quelconque des revendications 1 à 5, dans lequel les données chiffrées sont générées en chiffrant des données avec l'au moins une clé et une clé publique de la partie de réception de données.

11. Procédé de protection de données selon l'une quelconque des revendications 1 à 5, dans lequel les données chiffrées sont générées en chiffrant les données avec une première clé prédéterminée, l'au moins une clé participant à un processus de chiffrement pour la première clé prédéterminée.

12. Procédé de protection de données selon la revendication 11, dans lequel l'au moins une clé participe au processus de chiffrement pour la première clé prédéterminée comprenant l'étape consistant à :
chiffrer la première clé prédéterminée en utilisant l'au moins une clé ; ou
la première clé prédéterminée est chiffrée en utilisant l'au moins une clé et une clé publique de la partie de réception de données.

13. Procédé de protection de données selon l'une quelconque des revendications 1 à 5, dans lequel les données chiffrées sont générées en chiffrant les données avec une première clé prédéterminée, la première clé prédéterminée est chiffrée en utilisant une seconde clé prédéterminée, et la seconde clé prédéterminée est chiffrée en utilisant l'au moins une clé et une clé publique de la partie de réception de données.

14. Système de protection de données, comprenant un serveur, qui comprend une unité de gestion de clé (11) configurée pour générer ou stocker au moins une clé sur la base d'une demande d'une partie de transmission de données ;
le serveur comprenant en outre :
une unité de vérification (12) configurée pour vérifier si la partie de réception de données dispose d'une licence numérique dans un état valide correspondant à une demande de la partie de réception de données sur la base de la demande de la partie de réception de données, et le cas échéant,
pour permettre à la partie de réception de données d'utiliser l'au moins une clé dans le processus de déchiffrement des données chiffrées de la partie de transmission de données,
dans lequel la partie de transmission de données est un terminal utilisateur de transmission de données, et
dans lequel les données sont divisées en de multiples parties, chacune desquelles étant chiffrée avec une clé différente, la licence numérique stipulant la clé correspondante que la partie de réception de données a la permission d'utiliser,
dans lequel l'unité de vérification (12) est configurée pour transmettre à la partie de réception de données la clé correspondante de l'au moins une clé et/ou des données connexes requises pour utiliser la clé correspondante sur la base des informations de licence dans la licence numérique.
